# EUROPEAN PATENT SPECIFICATION

(11) **EP 4 483 701 B1**
(45) Date of publication and mention of the grant of the patent: **04.02.2026**
(21) Application number: 23182296.6
(22) Date of filing: 29.06.2023
(51) Int. Cl.: A01D 43/08, A01F 29/06, A01F 29/10

(54) **A CHOPPER ASSEMBLY FOR AN AGRICULTURAL HARVESTER**
HÄCKSELANORDNUNG FÜR EINE LANDWIRTSCHAFTLICHE ERNTEMASCHINE
ENSEMBLE HACHEUR POUR MOISSONNEUSE AGRICOLE

(43) Date of publication of application: 01.01.2025
(73) Proprietor: CNH Industrial Belgium N.V., 8210 Zedelgem (BE); CNH Industrial America LLC, New Holland, PA 17557 (US)
(72) Inventor: Desmet, Stefaan, 8210 Zedelgem (BE); Passchyn, Tim, 8210 Zedelgem (BE); Linde, Cooper, New Holland, 17557 (US); Kumar, Sumit, 110017 New Delhi (IN)
(74) Representative: CNH Industrial IP Department

(56) References cited:
- EP-A1- 3 092 891
- CN-A- 107 980 337
- CN-A- 115 316 138
- US-A- 2 857 946
- US-A1- 2018 343 805
- US-B2- 10 251 342

## Description

### Field of the Invention

The present invention is related to agricultural harvesters, in particular to a residue chopper assembly configured to be located at the rear of the harvester.

### State of the art.

In a combine harvester, crops like corn or wheat are cut and subsequently processed in order to separate grains from plant residue material. A combine harvester typically comprises a threshing section and a cleaning section, the latter including sieves for separating clean grains from smaller plant residue. The clean grains are collected in a trough at the bottom of the cleaning section, and thereafter transported to a grain tank higher up in the combine's structure.

Residue material, also referred to as material other than grain (MOG) needs to be removed from the harvester. This includes larger plant material such as stalks collected at the end of the threshing section, and smaller material blown towards the rear of the harvester by the cleaning fan. Before being evacuated from the harvester, the larger residue material can be chopped into smaller pieces in a chopper assembly, followed by a spreader which spreads the chopped residue particles in the form of a wide swath of residue material deposited on the field behind the advancing combine, as for instance disclosed in US2018/343805A.

The chopper assembly usually comprises a rotatable chopper drum comprising knives which move relative to stationary counterknives, to thereby chop the stalks into smaller particles. The drum is mounted transversally with respect to the fore-aft direction of the harvester, so that a stream of residue material is supplied to the chopping drum, with the width of the stream corresponding to the length of the drum. The knives are distributed at regular distances along the longitudinal direction of the drum, to thereby cut the stream of residue material into small particles. The chopper drum and counterknives are mounted between upright sidewalls which guide the stream of plant material towards the drum.

A problem related to presently known chopper assemblies is that due to space constraints and assembly requirements, the knives closest to the sidewalls are necessarily placed at a certain distance from these sidewalls, so that stalks are able to pass through these lateral spaces without being cut.

### Summary of the invention

The invention is related to a chopper assembly and to a harvester as described in the appended claims. The chopper assembly comprises a rotatable chopper drum as known from the prior art, comprising a plurality of knives, mounted between two sidewalls and configured to cut larger plant material into smaller particles through the interaction of the knives and a set of counterknives. According to the invention, a guide surface is mounted on at least one of the sidewalls, preferably on both sidewalls, and in the path of a stream of crop material advancing towards the chopper assembly. The guide surface extends between an upstream edge lying essentially in the plane of the sidewall and a downstream edge removed from the sidewall. The guide surface is furthermore inclined relative to the sidewall, so as to guide plant material away from the sidewall and in the direction of the knives located closest to the sidewall. The guide surface thereby prevents plant material from passing between the knives and the sidewall without being cut.

### Brief description of the figures

Figure 1a is a side view illustrating the main components of a combine harvester as known in the prior art, including the location of the chopper assembly and the residue spreader. Figures 1b and 1c illustrate the functioning of the chopper assembly and the spreader.
Figure 2 is a 3D section view illustrating the position of one of the guide surfaces in a chopper assembly according to an embodiment of the invention.
Figure 3 is a 2D section view of the chopper assembly of Figure 2, as seen in the direction of the chopper drum's rotation axis.
Figure 4a is a frontal view of the chopper drum including the two guide surfaces in a chopper assembly according to an embodiment of the invention. Figure 4b is an enlarged detail, showing the position of one of the guide surfaces.
Figure 5 is a detailed view of the guide surface according to an embodiment of the invention.
Figures 6a and 6b illustrate another embodiment of the invention wherein the guide surfaces are located upstream of the inlet opening of the chopper assembly.

### Detailed description of preferred embodiments of the invention

Preferred embodiments will now be described with reference to the drawings. The detailed description is not limiting the scope of the invention, which is defined only by the appended claims.

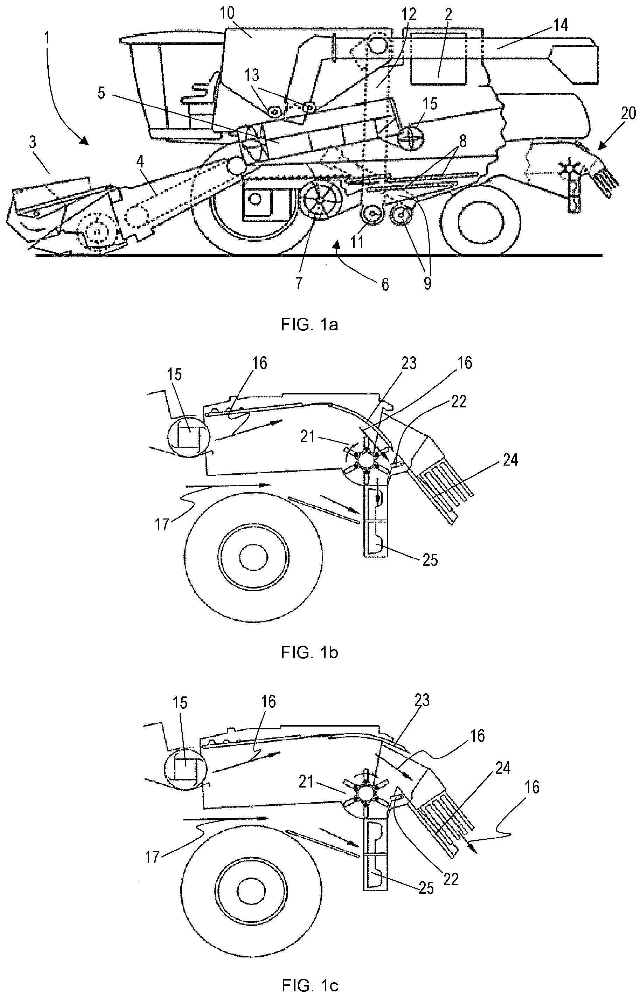

With reference to Figure 1a, a combine harvester 1 as presently known in the art includes an engine 2, a header 3 for cutting crops from the field, and for gathering the crops towards the inlet of a feeder 4. The feeder delivers the crops to one or two threshing rotors 5 which separate larger plant material from grains and smaller residue. The cleaning section 6 of the harvester includes a blower 7 and a plurality of sieves 8 for separating grains from the smaller residue. Insufficiently separated plant material is transported back to the threshing rotors via return augers 9. Fully separated grains are collected in a grain tank 10 through the combined action of a clean grain auger 11 and a grain elevator 12. From the tank 10, the grains may be evacuated from the harvester through further augers 13 at the bottom of the grain tank and through a pivotable spout 14. Small plant residue, also referred to as chaff, is blown towards the rear of the harvester by the blower 7.

Larger plant residue such as plant stalks and leaves, arrives at the end of the threshing rotors 5 and is subsequently moved to the rear of the harvester by a beater drum 15. A stream of such larger plant material is thereby supplied in the direction of a chopper assembly 20, shown in more detail in Figures 1b and 1c. The chopper assembly comprises a chopper drum 21 that is rotatable in the indicated direction relative to a set of counterknives 22. The general direction of the stream of large plant residue is indicated by the arrows 16. A pivotable cover 23 is arranged to direct the stream either towards the chopper drum 20 to be cut into smaller particles (as shown in Figure 1b) or directly towards an ejection chute 24 without being cut (as shown in Figure 1c). Downstream of the chopper drum 21, spreader wheels 25 are mounted. The spreader wheels receive a stream of chopped particles from the chopper assembly (when the cover 23 is pivoted downward) and a separate stream 17 of chaff from the cleaning section 6. The spreader wheels 25 spread out the chaff and chopped particles across a wide swath at the rear of the combine.

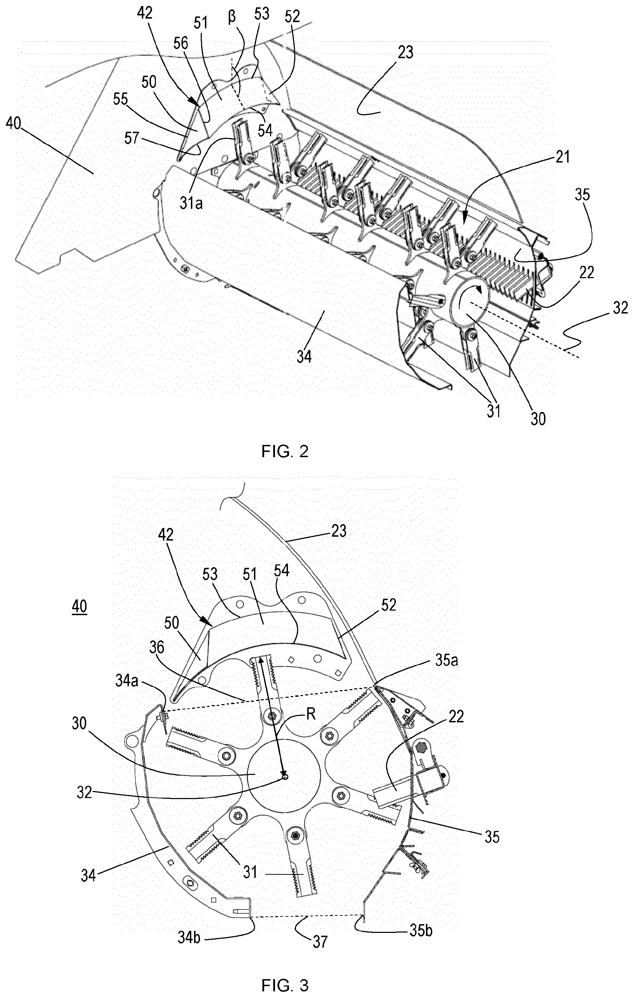

Whereas Figures 1a -1c are intended only to indicate the general location of the chopper assembly in a combine harvester, Figures 2 to 4 show various images of an actual chopper assembly in accordance with an embodiment of the invention.

A number of components of the represented embodiment which are known as such will be described first. The chopper drum 21 comprises a cylinder 30 with knives 31 pivotably attached thereto. The knives are arranged in linear rows mounted on the cylinder's surface at regular angular distances between consecutive rows, each row comprising knives mounted at regular linear distances in the longitudinal direction of the cylinder 30. The drum 21 is rotatable about its central rotation axis 32, the rotation being driven by a suitable drive mechanism known as such and therefore not described here in detail. A set of counterknives 22 is mounted so that the chopper knives 31 move in between the counterknives 22 as the drum rotates in the indicated direction, to thereby cut the plant residue into smaller pieces.

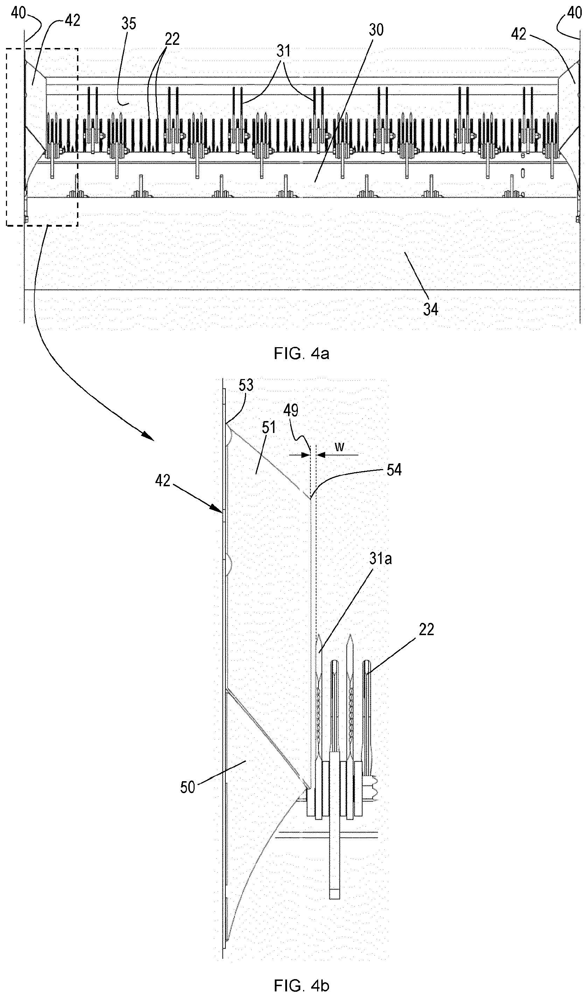

In the front-aft direction of the combine, the chopper drum 21 is mounted between a front concave 34 and a rear concave 35. Each of these concaves extends between an inlet edge (34a,34b) and an outlet edge (35a,35b). These edges respectively define an inlet opening 36 between inlet edges 34a and 35a and an outlet opening 37 between outlet edges 34b and 35b. With the pivotable cover 23 in the downward position as shown in Figures 2 and 3, the path of the plant material coming from the threshing rotors passes through the inlet opening 36, and a stream of chopped particles is ejected through the outlet opening 37. In the transversal direction, and as best visible in Figure 4a, the drum 21 is rotatably mounted between upright sidewalls 40.

In accordance with the invention, the chopper assembly comprises guide surfaces 42 on the respective sidewalls 40. The main portion 51 (see Figures 2 and 3) of these surfaces 42 is oriented at an obtuse angle β relative to the respective sidewalls. The guide surfaces 42 extend between an upstream edge 53,55 lying essentially in the plane of the sidewalls 40 and a downstream edge 54,57 removed from the sidewalls in the longitudinal direction of the chopper drum 21. The guide surfaces 42 are thus inclined relative to the sidewalls 40 in such a manner as to guide plant material away from the sidewalls and in the direction of the outer knives 31a of the drum, i.e. the knives which are located closest to the sidewalls, thereby ensuring that essentially no plant stalks or other large plant material passes through the gap between these outer knives 31a and the sidewalls 40 without being cut.

Figures 2 and 3 illustrate the shape of the guide surfaces 42 according to one embodiment of the invention. This particular shape is however just one example of a suitable shape, and other examples will be described later in this text. A common characteristic to all embodiments of the invention is that the guide surfaces force plant material at the sides of the incoming stream to be deflected towards the knives of the chopper drum 21.

Figures 2 and 3 show one guide surface 42 mounted on one of the sidewalls 40. The other guide surface on the opposite sidewall is the mirror image of the illustrated guide surface 42. The invention is however not limited to embodiments wherein the guide surfaces are identical and mirrored. Although the latter represents an option that may be preferable in most harvester configurations, in some configurations it could be advantageous to provide guide surfaces on the two sidewalls which differ from each other in terms of their shapes and dimensions. Also, the invention includes embodiments wherein a guide surface is only present on one side of the chopper drum, on one of the sidewalls 40, while no guide surface is mounted on the opposite sidewall. This may be appropriate in cases were the gap between the knives and one of the sidewalls is smaller on one side than on the opposite side for example.

As seen in the drawings, the guide surface 42 in the illustrated embodiment is part of a welded piece that is bolted to the side wall 40. The guide surface is thereby removably attached to the sidewall. According to other embodiments however, the guide surface may be permanently attached or uniform with the sidewall.

In any embodiment of the invention, the guide surface is mounted in the path of the incoming crop stream. In the embodiment shown in Figures 2 and 3, the guide surface 42 is located across the inlet opening 36, i.e. along one lateral side of said inlet opening. Other locations of the guide surface are possible, as will be illustrated later.

In the embodiment shown, the welded piece comprises plate elements whose outer surfaces define the guide surface 42, which comprises a triangular side portion 50 and a conical main portion 51. A triangular plate element 52 is located on the opposite side of the first triangular portion 50. The outer surface of this latter plate element 52 is more or less perpendicular to the sidewall 40 and is therefore not a part of the guide surface as such.

The conical portion 51 extends between a first curved edge 53 and a second curved edge 54. The first curved edge 53 is essentially in the plane of the sidewall 40. As best seen in Figure 4b, the second curved edge 54 is located in an end plane 49 that is perpendicular to the drum's rotation axis 32 and adjacent to the knives 31a located closest to the sidewall 40, with a small gap w remaining between said end plane 49 and the knives 31a. According to the embodiment shown in the drawing, the gap w is situated on the far side of the knives 31a, as seen from the middle of the drum cylinder 30. In other words, the width of the guide surface 42 (as measured in the direction of the drum's rotation axis 32) almost fills the distance between the knives 31a and the sidewalls 40 but does not overlap with said knives 31a (i.e. the knives closest to the sidewalls). A small overlap with said closest knives 31a may nevertheless be allowed, although it cannot be so big as to obstruct the cutting function of the knives 31a.

As seen in the side view regarded along the drum's rotation axis 32 in Figure 3, the second curved edge 54 does not overlap the knives 31 when the knives are oriented radially with respect to the cylinder, i.e. when the drum is rotating at a sufficient speed so that the knives are forced into this radial position along radius R by the centrifugal force. Although this latter feature (guide surface does not overlap the knives in the side view) is not a limiting feature of the invention, it is nevertheless preferred in order to avoid plant material becoming stuck between the outer knives 31a and the guide surface 42.

The first triangular side portion 50 extends between a straight edge 55 essentially in the plane of the sidewall 40, a lateral edge 56 of the conical portion 51, and a curved lower edge 57. This inclined triangular portion 50 optimizes the guidance of crops at one side of the inlet gap. The invention is however not limited to guide surfaces comprising this triangular side portion 50.

The triangular plate element 52 closes off the conical portion 51 on the side opposite the side at which the first triangular portion 50 is located. As stated, the surface of the plate element 52 is not to be regarded as part of the guide surface 42 as such.

The guide surface 42 in the case of the illustrated embodiment is therefore formed by the combined portions 50 and 51. The upstream edge is formed by the combined edges 55 and 53. The downstream edge is formed by the combined edges 57 and 54.

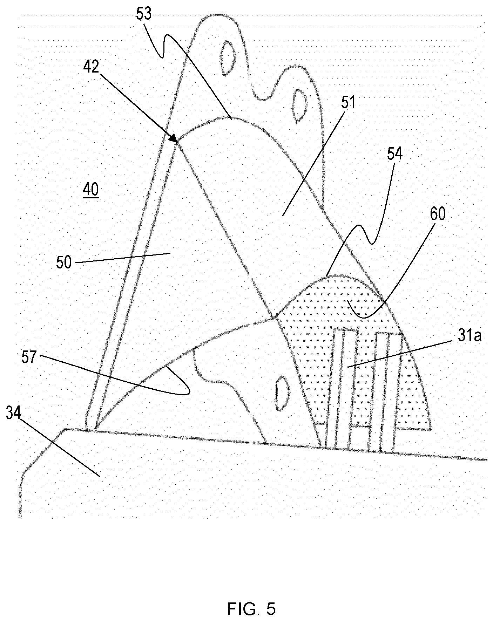

Another element that is optional is illustrated in the detail image in Figure 5. It is seen that a cylindrical bottom plate element 60 blocks the entry of plant material into the space between the sidewall 40 and the downstream edge 54,57. This cylindrical plate element 60 thereby prevents crops from accumulating in this space.

As stated above, the invention is not limited to the specific shape of the guide surfaces shown in Figures 2-4. The surfaces could have more rudimental shapes, as long as they are suitable for guiding the crops away from the sidewalls and towards the knives 31a closest to the sidewalls. In stead of having a conical shape for example, the guide surfaces could be flat surfaces oriented at a suitable obtuse angle in the direction of the knives. On the other hand, the shape may be more intricate than illustrated, for example comprising several portions oriented at one or more different obtuse angles relative to the sidewall.

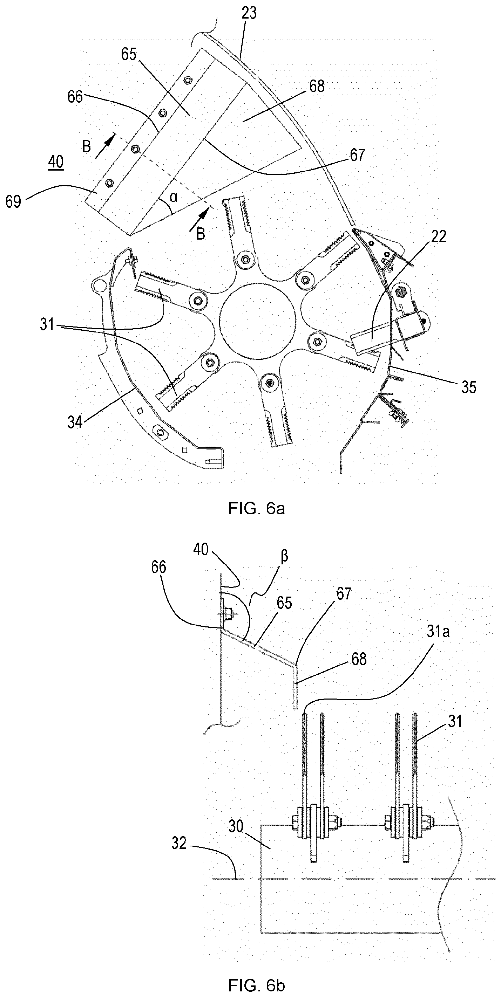

According to another embodiment, the guide surfaces are not placed directly in the inlet opening 36 but more upstream in the path of the plant material. Such an embodiment is illustrated in Figure 6. The guide surface 65 is a straight inclined surface placed at an angle α to the inlet opening 36 and inclined at an obtuse angle β with respect to the sidewall 40. The guide surface 65 in this embodiment is a plate element that is uniform with a strip 69 bolted to the sidewall 40. The guide surface 65 extends between an upstream edge 66 and a downstream edge 67. In addition, a guide plate 68 is attached to the downstream edge 67. The guide plate 68 is oriented perpendicularly to the drum's rotation axis 32 and located adjacent and in close proximity to the outer knives 31a. After being deflected from the sidewall by the guide surface 65, plant material is guided along the guide plate 68 towards the knives. Like the embodiment of Figures 2 to 4, the effect is also that plant material is inhibited from passing between the sidewalls and the knives without being cut. Instead of the straight guide surface 65, more intricate shapes of the guide surfaces can be applied in this embodiment, i.e. placed upstream of the inlet opening and combined with a guide plate 68.

It is understood therefore that various embodiments not described here explicitly are within the scope of the appended claims.

## Claims

1. A chopper assembly for an agricultural harvester, the assembly comprising :
- a chopper drum (20) comprising a plurality of chopper knives (31) arranged along the longitudinal direction of the drum, wherein the drum is rotatable about a longitudinal rotation axis (32),
- a set of counterknives (22),
- a pair of sidewalls (40) oriented transversely with respect to the rotation axis of the chopper drum, with the drum rotatably mounted between said sidewalls,
- an inlet opening (36) and an outlet opening (37), each comprising a first and second lateral side arranged along the respective sidewalls (40),
wherein the chopper assembly is configured to :
- receive through said inlet opening (36) a stream of plant material advancing between the sidewalls (40),
- cut the plant material into particles,
- eject the particles through the outlet opening (37),
**characterized in that** the assembly further comprises at least one guide surface (42,65) mounted on at least one of the sidewalls (40), wherein said guide surface:
- extends between an upstream edge (53,55;66) lying essentially in the plane of the sidewall (40) and a downstream edge (54,57;67) removed from the sidewall (40),
- is inclined relative to the sidewall (40) so as to guide said plant material away from the sidewall and in the direction of the chopper knives (31a) located closest to the sidewall (40).

2. The chopper assembly according to claim 1, wherein at least a portion of the downstream edge (54,57;68) of the guide surface (42,65) is lying in an end plane (49) oriented essentially perpendicularly to the drum's rotation axis (32).

3. The chopper assembly according to claim 2, wherein said end plane (49) is located in close proximity to said knives (31a) located closest to the sidewall (40), whilst lying on the far side of said knives (31a) as seen from the middle of the chopper drum (21).

4. The chopper assembly according to claim 2 or 3, wherein the guide surface (42) comprises or consists of a conical surface portion (51) extending between curved portions (53,54) of said upstream and downstream edges.

5. The chopper assembly according to claim 4, wherein the curved portion (54) of the downstream edge does not overlap the knives (31) as seen in a side view along the chopper drum's rotation axis (32), when the chopper drum (21) is rotating.

6. The chopper assembly according to any one of the preceding claims, wherein the guide surface (42) comprises one or more portions oriented at one or more different obtuse angles (β) to the sidewall (40).

7. The chopper assembly according to claim 6, wherein the guide surface (42) comprises a conical portion (51) and a triangular portion (50) to one lateral side of the conical portion.

8. The chopper assembly according to any one of the preceding claims, wherein the guide surface (42) is located across the inlet opening (36), at a lateral side thereof.

9. The chopper assembly according to any one of claims 1 to 7, wherein the guide surface (65) is located upstream of a lateral side of the inlet opening (36).

10. The chopper assembly according to claim 9, further comprising a guide plate (68) attached to the downstream edge (67) of the guide surface (65), and oriented essentially perpendicularly to the drum's rotation axis (32) and configured to guide plant material from the downstream edge (67) of the guide surface in the direction of the knives (31a) closest to the sidewall (40).

11. The chopper assembly according to any one of the preceding claims, wherein the guide surface (42,65) is part of a separate piece that is removably attached to the sidewall (40).

12. The chopper assembly according to any one of the preceding claims, wherein the guide surface (42,65) is realized by at least one plate element oriented at an obtuse angle from the sidewall (40), so that an open space is created between said plate element and the sidewall (40), and wherein an additional plate element (60) is mounted between the downstream edge (54,57) and the sidewall (40), so as to block entry of plant material into said open space in a direction perpendicular to the upstream edge.

13. The chopper assembly according to any one of the preceding claims, comprising a first and second concave (34,35) with the chopper drum (20) mounted between said concaves, wherein both concaves comprise an inlet edge (34a,35a) and an outlet edge (34b,35b), so that said inlet opening (36) is formed between the inlet edges and said outlet opening (37) is formed between the outlet edges.

14. The chopper assembly according to any one of the preceding claims, wherein guide surfaces (42) are mounted on both sidewalls (40), said guide surfaces being identical in shape and dimensions but mirrored relative to each other with respect to a plane perpendicular to the drum's rotation axis (32).

15. An agricultural harvester comprising a chopper assembly in accordance with any one of the preceding claims.

## Patentansprüche

1. Häcksleranordnung für eine landwirtschaftliche Erntemaschine, wobei die Anordnung aufweist:
- eine Häckseltrommel (20) mit einer Vielzahl von Häckselmessern (31), die entlang der Längsrichtung der Trommel angeordnet sind, wobei die Trommel um eine Längsdrehachse (32) drehbar ist,
- einen Satz von Gegenmessern (22),
- ein Paar von Seitenwänden (40), die quer zur Drehachse der Häckseltrommel ausgerichtet sind, wobei die Trommel zwischen den Seitenwänden drehbar gelagert ist,
- eine Einlassöffnung (36) und eine Auslassöffnung (37), die jeweils eine erste und eine zweite Seitenkante aufweisen, die entlang der jeweiligen Seitenwände (40) angeordnet sind,
wobei die Häcksleranordnung dazu eingerichtet ist:
- über die Einlassöffnung (36) einen Strom von Pflanzenmaterial aufzunehmen, der sich zwischen den Seitenwänden (40) fortbewegt,
- das Pflanzenmaterial in Partikel zu zerschneiden,
- die Partikel durch die Auslassöffnung (37) auszustoßen,
**dadurch gekennzeichnet, dass** die Anordnung ferner mindestens eine Führungsfläche (42, 65) aufweist, die an mindestens einer der Seitenwände (40) angebracht ist, wobei die Führungsfläche:
- sich zwischen einer stromaufwärtigen Kante (53, 55; 66), die im Wesentlichen in der Ebene der Seitenwand (40) liegt, und einer stromabwärtigen Kante (54, 57; 67) erstreckt, die von der Seitenwand (40) entfernt ist,
- relativ zur Seitenwand (40) geneigt ist, um das Pflanzenmaterial von der Seitenwand weg und in Richtung der den Seitenwänden (40) am nächsten gelegenen Häckselmesser (31a) zu führen.

2. Häcksleranordnung nach Anspruch 1, wobei zumindest ein Abschnitt der stromabwärtigen Kante (54, 57; 68) der Führungsfläche (42, 65) in einer Endebene (49) liegt, die im Wesentlichen senkrecht zur Drehachse (32) der Trommel orientiert ist.

3. Häcksleranordnung nach Anspruch 2, wobei die Endebene (49) in unmittelbarer Nähe der den Seitenwänden (40) am nächsten gelegenen Messer (31a) liegt, während sie auf der von der Trommelmitte (21) abgewandten Seite dieser Messer (31a) liegt.

4. Häcksleranordnung nach Anspruch 2 oder 3, wobei die Führungsfläche (42) einen konischen Flächenabschnitt (51) umfasst oder daraus besteht, der sich zwischen gekrümmten Abschnitten (53, 54) der stromaufwärtigen und stromabwärtigen Kanten erstreckt.

5. Häcksleranordnung nach Anspruch 4, wobei der gekrümmte Abschnitt (54) der stromabwärtigen Kante die Messer (31) in einer Seitenansicht entlang der Drehachse (32) der Häckseltrommel (21) nicht überlappt, wenn die Häckseltrommel (21) rotiert.

6. Häcksleranordnung nach einem der vorhergehenden Ansprüche, wobei die Führungsfläche (42) einen oder mehrere Abschnitte umfasst, die unter einem oder mehreren unterschiedlichen stumpfen Winkeln (β) zur Seitenwand (40) orientiert sind.

7. Häcksleranordnung nach Anspruch 6, wobei die Führungsfläche (42) einen konischen Abschnitt (51) und einen dreieckigen Abschnitt (50) an einer seitlichen Seite des konischen Abschnitts umfasst.

8. Häcksleranordnung nach einem der vorhergehenden Ansprüche, wobei die Führungsfläche (42) über der Einlassöffnung (36) an einer seitlichen Seite davon angeordnet ist.

9. Häcksleranordnung nach einem der Ansprüche 1 bis 7, wobei die Führungsfläche (65) stromaufwärts einer seitlichen Seite der Einlassöffnung (36) angeordnet ist.

10. Häcksleranordnung nach Anspruch 9, ferner mit einer Führungsplatte (68), die an der stromabwärtigen Kante (67) der Führungsfläche (65) befestigt ist, im Wesentlichen senkrecht zur Drehachse (32) der Trommel orientiert ist und dazu eingerichtet ist, Pflanzenmaterial von der stromabwärtigen Kante (67) der Führungsfläche in Richtung der den Seitenwänden (40) am nächsten gelegenen Messer (31a) zu führen.

11. Häcksleranordnung nach einem der vorhergehenden Ansprüche, wobei die Führungsfläche (42, 65) Teil eines separaten Bauteils ist, das lösbar an der Seitenwand (40) befestigt ist.

12. Häcksleranordnung nach einem der vorhergehenden Ansprüche, wobei die Führungsfläche (42, 65) durch mindestens ein Plattenelement gebildet ist, das unter einem stumpfen Winkel von der Seitenwand (40) absteht, sodass zwischen dem Plattenelement und der Seitenwand (40) ein offener Raum gebildet ist, und wobei ein zusätzliches Plattenelement (60) zwischen der stromabwärtigen Kante (54, 57) und der Seitenwand (40) montiert ist, um das Eindringen von Pflanzenmaterial in den offenen Raum in einer Richtung senkrecht zur stromaufwärtigen Kante zu verhindern.

13. Häcksleranordnung nach einem der vorhergehenden Ansprüche, mit einer ersten und zweiten Korbkonkave (34, 35), zwischen denen die Häckseltrommel (20) montiert ist, wobei beide Korbkonkaven jeweils eine Einlasskante (34a, 35a) und eine Auslasskante (34b, 35b) aufweisen, sodass die Einlassöffnung (36) zwischen den Einlasskanten und die Auslassöffnung (37) zwischen den Auslasskanten gebildet ist.

14. Häcksleranordnung nach einem der vorhergehenden Ansprüche, wobei Führungsflächen (42) an beiden Seitenwänden (40) angebracht sind, wobei die Führungsflächen in Form und Abmessung identisch, jedoch spiegelbildlich zueinander bezüglich einer zur Drehachse (32) der Trommel senkrechten Ebene angeordnet sind.

15. Landwirtschaftliche Erntemaschine mit einer Häcksleranordnung nach einem der vorhergehenden Ansprüche.

## Revendications

1. Un ensemble hacheur pour une moissonneuse agricole, l'ensemble comprenant :
- un tambour hacheur (20) comprenant une pluralité de couteaux hacheurs (31) disposés le long de la direction longitudinale du tambour, dans lequel le tambour peut tourner autour d'un axe de rotation longitudinal (32),
- un jeu de contre-couteaux (22),
- une paire de parois latérales (40) orientées transversalement par rapport à l'axe de rotation du tambour hacheur, le tambour étant monté rotatif entre lesdites parois latérales,
- une ouverture d'entrée (36) et une ouverture de sortie (37), chacune comprenant un premier et un second côté latéral disposés le long des parois latérales respectives (40),
dans lequel l'ensemble hacheur est configuré pour :
- recevoir par ladite ouverture d'entrée (36) un flux de matière végétale avançant entre les parois latérales (40),
- couper la matière végétale en particules,
- éjecter les particules par l'ouverture de sortie (37),
**caractérisé en ce que** l'ensemble comprend en outre au moins une surface de guidage (42,65) montée sur au moins une des parois latérales (40), dans laquelle ladite surface de guidage :
- s'étend entre un bord amont (53,55;66) se trouvant essentiellement dans le plan de la paroi latérale (40) et un bord aval (54,57;67) éloigné de la paroi latérale (40),
- est inclinée par rapport à la paroi latérale (40) de manière à guider la matière végétale loin de la paroi latérale et dans la direction des couteaux hacheurs (31a) situés au plus près de la paroi latérale (40).

2. L'ensemble hacheur selon la revendication 1, dans lequel au moins une partie du bord aval (54,57;68) de la surface de guidage (42,65) se trouve dans un plan d'extrémité (49) orienté essentiellement perpendiculairement à l'axe de rotation du tambour (32).

3. L'ensemble hacheur selon la revendication 2, dans lequel ledit plan d'extrémité (49) est situé à proximité des couteaux (31a) les plus proches de la paroi latérale (40), tout en se trouvant de l'autre côté desdits couteaux (31a) tels qu'observés depuis le centre du tambour hacheur (21).

4. L'ensemble hacheur selon la revendication 2 ou 3, dans lequel la surface de guidage (42) comprend ou consiste en une partie de surface conique (51) s'étendant entre des parties incurvées (53, 54) desdits bords amont et aval.

5. L'ensemble hacheur selon la revendication 4, dans lequel la partie incurvée (54) du bord aval ne recouvre pas les couteaux (31) tels qu'observés dans une vue latérale le long de l'axe de rotation (32) du tambour hacheur, lorsque le tambour hacheur (21) est en rotation.

6. L'ensemble hacheur selon l'une quelconque des revendications précédentes, dans lequel la surface de guidage (42) comprend une ou plusieurs parties orientées selon un ou plusieurs angles obtus différents (13) par rapport à la paroi latérale (40).

7. L'ensemble hacheur selon la revendication 6, dans lequel la surface de guidage (42) comprend une partie conique (51) et une partie triangulaire (50) sur un côté latéral de la partie conique.

8. L'ensemble hacheur selon l'une quelconque des revendications précédentes, dans lequel la surface de guidage (42) est située au niveau de l'ouverture d'entrée (36), sur un côté latéral de celle-ci.

9. L'ensemble hacheur selon l'une quelconque des revendications 1 à 7, dans lequel la surface de guidage (65) est située en amont d'un côté latéral de l'ouverture d'entrée (36).

10. L'ensemble hacheur selon la revendication 9, comprenant en outre une plaque de guidage (68) fixée au bord aval (67) de la surface de guidage (65), et orientée essentiellement perpendiculairement à l'axe de rotation du tambour (32) et configurée pour guider la matière végétale depuis le bord aval (67) de la surface de guidage dans la direction des couteaux (31a) les plus proches de la paroi latérale (40).

11. L'ensemble hacheur selon l'une quelconque des revendications précédentes, dans lequel la surface de guidage (42,65) fait partie d'une pièce distincte fixée de manière amovible à la paroi latérale (40).

12. L'ensemble hacheur selon l'une quelconque des revendications précédentes, dans lequel la surface de guidage (42,65) est formée par au moins un élément de plaque orienté selon un angle obtus par rapport à la paroi latérale (40), de sorte qu'un espace ouvert est créé entre ledit élément de plaque et la paroi latérale (40), et dans lequel un élément de plaque supplémentaire (60) est monté entre le bord aval (54,57) et la paroi latérale (40), de manière à bloquer l'entrée de la matière végétale dans ledit espace ouvert dans une direction perpendiculaire au bord amont.

13. L'ensemble hacheur selon l'une quelconque des revendications précédentes, comprenant un premier et un second contre-batteur (34,35) avec le tambour hacheur (20) monté entre lesdits contre-batteurs, dans lequel les deux contre-batteurs comprennent un bord d'entrée (34a,35a) et un bord de sortie (34b,35b), de sorte que ladite ouverture d'entrée (36) est formée entre les bords d'entrée et ladite ouverture de sortie (37) est formée entre les bords de sortie.

14. L'ensemble hacheur selon l'une quelconque des revendications précédentes, dans lequel des surfaces de guidage (42) sont montées sur les deux parois latérales (40), lesdites surfaces de guidage étant identiques en forme et en dimensions, mais en miroir l'une par rapport à l'autre selon un plan perpendiculaire à l'axe de rotation du tambour (32).

15. Une moissonneuse agricole comprenant un ensemble hacheur selon l'une quelconque des revendications précédentes.
